# EUROPEAN PATENT APPLICATION

(11) **EP 4 525 216 A1**
(43) Date of publication of application: **19.03.2025**
(21) Application number: 24196692.8
(22) Date of filing: 27.08.2024
(51) Int. Cl.: H01R 13/53, H01M 50/572, H02H 9/00, H01R 13/66

(54) **ELECTRICAL CONNECTING DEVICE**

(30) Priority: 13.09.2023 KR 20230121978
(71) Applicant: SAMSUNG SDI CO., LTD., Giheung-gu Yongin-si, Gyeonggi-do 17084 (KR)
(72) Inventor: Kang, Sungkoo, 17084 Yongin-si, Gyeonggi-do (KR)
(74) Representative: Gulde & Partner

(57) **Abstract**

The present disclosure relates to connecting device. The connecting device includes a first connector including a first connecting terminal, and a second connector including a second connecting terminal defining a hollow portion configured to receive the first connecting terminal, the second connecting terminal including first and second conductors spaced apart from each other along an insertion direction of the first connecting terminal, and a first resistor electrically connected between the first and second conductors, and wherein the second connector further includes a first elastic structure between the first and second conductors, and configured to provide an elastic force against an insertion force of the first connecting terminal to resist insertion of the first connecting terminal.

## Description

### BACKGROUND

### 1. Field

The present disclosure relates to a connecting device for a battery.

### 2. Description of the Related Art

A secondary battery differs from a primary battery, which only provides non-reversible conversion of chemical energy to electrical energy, in that the secondary battery can be charged and discharged repeatedly.

The secondary battery may be used as a battery module formed of a plurality of unit battery cells coupled in series and/or in parallel so as to provide a high energy density. Battery modules may be coupled in series and/or parallel to configure a high-capacity battery pack or battery rack.

In the process of coupling battery modules to configure a battery pack or battery rack, a phenomenon may occur where surge-type inrush current flows into each battery module due to parasitic capacitors between the battery cells and the module case.

Even in the process of connecting a battery pack or battery rack to a load, an inrush current may flow into the load-side capacitor. This inrush current acts as a cause of damage to electronic devices (for example, a battery management system (BMS) module mounted on each battery module) that are vulnerable to inrush current.

### SUMMARY

The present disclosure provides a (electrical) connecting device capable of limiting the inrush current that occurs in the process of connecting a battery module with another battery module or load.

A connecting device according to embodiments includes a first connector including a first connecting terminal, and a second connector including a second connecting terminal defining a hollow portion configured to receive the first connecting terminal, the second connecting terminal including first and second conductors spaced apart from each other along an insertion direction of the first connecting terminal, and a first resistor electrically connected between the first and second conductors. This arrangement provides the advantage, that at the initial insertion of the first connecting terminal into the second connector, first closing of the circuit includes the resistor between the first conductor and the second conductor, and therefore an inrush current may be suppressed by the resistor. The second connector further includes a first elastic structure between the first and second conductors, and configured to provide an elastic force against an insertion force of the first connecting terminal to resist insertion of the first connecting terminal.

The first connecting terminal may be configured to (electrically conductive) contact the first conductor at an initial stage of connection of the first connector and the second connector, and may be configured to (electrically) contact with the second conductor upon insertion of the first connecting terminal into the second connecting terminal.

The first elastic structure may include an insulator between the first and second conductors, protruding toward the hollow portion due to the elastic force, and having a variable protrusion height corresponding to the insertion force. The insulator may consist of an elastic material. The first elastic structure may further include a spring device between the insulator and a connector body of the second connector, and configured to provide the elastic force to the insulator.

The first connector may further include a first wire configured to electrically connect a battery or a load to the first connecting terminal, wherein the second connector further includes a second wire configured to electrically connect the load or the battery to the second connecting terminal.

The first connector may further include a first wire configured to electrically connect a first battery to the first connecting terminal, wherein the second connector further includes a second wire configured to electrically connect a second battery to the second connecting terminal.

The first connector may further include a third connecting terminal, wherein the second connector further includes a fourth connecting terminal having a hollow portion configured to receive the third connecting terminal.

The fourth connecting terminal may include third and fourth conductors spaced apart from each other along an insertion direction of the third connecting terminal, and a second resistor electrically connected between the third and fourth conductors, wherein the second connector further includes a second elastic structure between the third and fourth conductors, and configured to provide an elastic force against an insertion force of the third connecting terminal to resist insertion of the third connecting terminal.

The third connecting terminal may be configured to contact the third conductor at an initial stage of connection of the first connector and the second connector, and is configured to contact the fourth conductor upon insertion of the third connecting terminal into the fourth connecting terminal.

The first connector may further include a third wire electrically configured to electrically connect a battery or a load to the third connecting terminal, wherein the second connector further includes a fourth wire configured to electrically connect the load or the battery to the fourth connecting terminal.

The first connector may further include a third wire configured to electrically connect a first battery to the third connecting terminal, wherein the second connector further includes a fourth wire configured to electrically connect a second battery to the fourth connecting terminal.

The first and second conductors may have a ring, cylindrical, or polygonal column shape into which the first connecting terminal is insertable.

The first connecting terminal may include a pin or a column-shaped conductor, wherein preferably the first conductor and the second conductor may have a ring, cylindrical, or polygonal column shape configured to receive the first connecting terminal.

Another aspect of the disclosure refers to a second connector (electric socket) as described before for use with a corresponding electric plug.

A last aspect of the disclosure refers to a first connector (electric plug) as described before for use with the second connector (electric socket) of the preceding aspect.

According to the present disclosure, it is possible to limit the inrush current that occurs in the process of connecting a battery module with another battery module or load, thereby reducing or preventing the likelihood of damage to components due to the inrush current.

### BRIEF DESCRIPTION OF DRAWINGS

FIG. 1 schematically illustrates a connecting device according to embodiments.
FIG. 2 is a perspective view schematically illustrating a socket terminal of a connecting device according to embodiments.
FIGS. 3A to 3C are diagrams for describing a process of connecting a first connector and a second connector in a connecting device according to embodiments.
FIG. 4 illustrates an example in which a connecting device according to embodiments is applied to the electrical connection of a battery.
FIG. 5 illustrates another example in which a connecting device according to embodiments is applied to the electrical connection of a battery.
FIG. 6 schematically illustrates a connecting device according to one or more other embodiments.
FIG. 7 schematically illustrates a connecting device according to one or more other embodiments.
FIG. 8 illustrates an example in which the connecting device according to the embodiments of FIGS. 6 and 7 is applied to the electrical connection of a battery.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions, such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions, such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a connecting device according to embodiments will be described in detail with reference to the drawings.

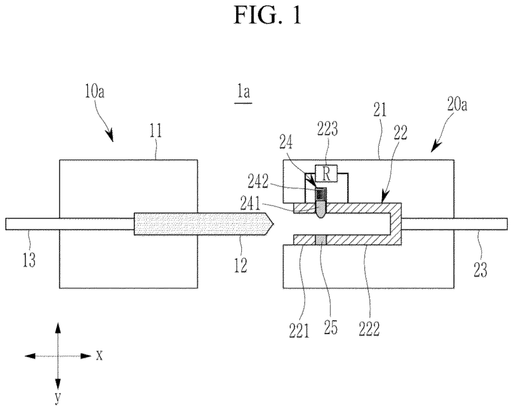

FIG. 1 schematically illustrates a connecting device according to embodiments.

Referring to FIG. 1, a connecting device 1a according to embodiments may include a first connector 10a and a second connector 20a.

The first connector 10a is a male connector that functions as a plug, particularly an electric plug. The first connector 10a may include a first connector body 11, and a first connecting terminal 12 (hereinafter referred to as a "plug terminal") protruding in one direction (x-direction) from one surface of the first connector body 11.

The second connector 20a is a female connector that functions as a socket, particularly an electric socket. The second connector 20a may include a second connector body 21, and a second connecting terminal 22 (hereinafter referred to as a "socket terminal") located inside the second connector body 21.

If the first connector 10a and the second connector 20a are coupled, the plug terminal 12 may be inserted and (directly) coupled to the socket terminal 22. The plug terminal 12 may have a pin or column shape protruding in the insertion direction (x-direction). The socket terminal 22 may have a cylindrical shape including or defining a hollow inside extending along the insertion direction (x-direction) of the plug terminal 12. The socket terminal 22 may alternatively have a polygonal column shape, such as a triangle or square with a hollow inside extending along the insertion direction (x-direction) of the plug terminal 12.

The plug terminal 12 and the socket terminal 22 may be formed of a conductor for electrical connection. If the plug terminal 12 is inserted into the hollow portion of the socket terminal 22, the outer wall of the plug terminal 12 is in contact with the hollow inner wall of the socket terminal 22, and the plug terminal 12 and the socket terminal 22 may be electrically connected to each other. In more detail, when the plug terminal 12 is completely inserted into the hollow of the socket terminal 22, the outer wall of the plug terminal 12 is in contact with the hollow inner wall of the socket terminal 22, i.e. with a first conductor 221 and a second conductor 222, and thus the plug terminal 12 and the socket terminal 22 are electrically connected to each other.

The first connector 10a may further include a wire 13 electrically connected to the plug terminal 12. The second connector 20a may further include a wire 23 electrically connected to the socket terminal 22. The first connector 10a may be connected to a battery or to a load that receives power from the battery through the wire 13. The second connector 20a may be connected to a battery or to a load that receives power from the battery through the wire 23.

The socket terminal 22 may include a plurality of conductors 221 and 222 spaced apart from each other along the insertion direction (x-direction) of the plug terminal 12 to limit the inrush current, and a resistor 223 connected between the plurality of conductors 221 and 222. In other words, the first conductor 221 and the second conductor 222 are not in direct electrical contact. The first conductor 221 and the second conductor 222 are coupled via a resistor 223. The first conductor 221 may be located at the outer position of the hollow, i.e. on the inlet side of the second connector 20, where the plug terminal 12 is inserted. The second conductor 222 may be located at the inner position of the hollow.

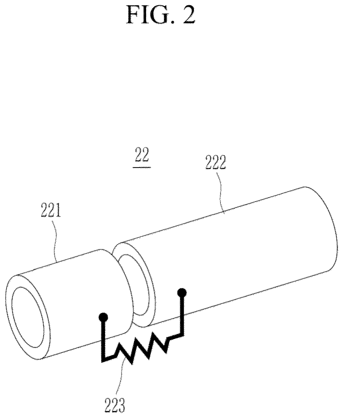

FIG. 2 is a perspective view schematically illustrating the socket terminal 22 of FIG. 1.

Referring to FIG. 2, the conductors 221 and 222 may have a ring, cylindrical, or polygonal pillar shape, such as a triangle or square, and may include a hollow inside into which the plug terminal 12 is insertable. Referring back to FIG. 1, the first conductor 221 may be located on the inlet side of the second connector 20a where the plug terminal 12 is inserted. The second conductor 222 may be located in the second connector 20a at a position where it may be in contact with the plug terminal 12 if the plug terminal 12 is inserted into the socket terminal 22 (e.g., at a predetermined depth or more). The predetermined depth corresponds to at least the length of the first conductor in a x-direction and a length of the first elastic structure 24 in a x-direction.

Referring back to FIG. 1, the second connector 20a may further include an elastic structure 24 located between the conductors 221 and 222 configuring the socket terminal 22 to secure insulation between the conductors 221 and 222, and to delay or retard the insertion speed of the plug terminal 12.

The elastic structure 24 is located between the conductors 221 and 222 and is made of an insulating material to ensure insulation between the conductors 221 and 222. The elastic structure 24 may protrude from the second connector body 21 of the second connector 20a (e.g., in a predetermined direction (y-direction)), and may protrude toward the hollow portion of the socket terminal 22. The elastic structure 24 has a protruding height reduced by the insertion force of the plug terminal 12, and may provide an elastic force against the insertion force of the plug terminal 12. Referring to FIG. 1 as an example, the elastic structure 24 may include an insulator 241 located between the conductors 221 and 222, and a spring device 242 positioned between the insulator 241 and the second connector body 21 for applying an elastic force to the insulator 241 (in y-direction).

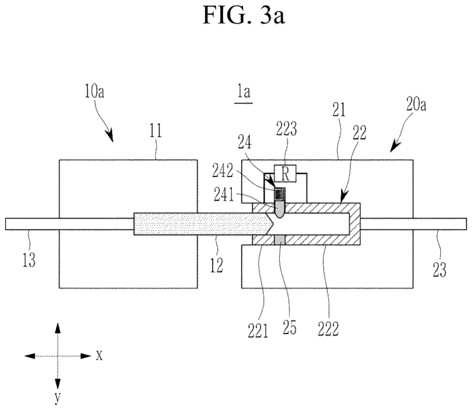

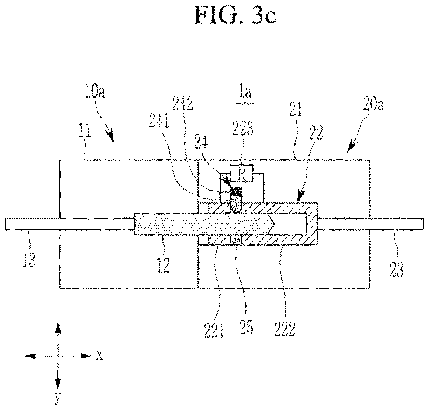

FIGS. 3A to 3C are diagrams for describing a process of connecting the first connector 10a and the second connector 20a.

Referring to FIG. 3A, at the initial stage of connection the plug terminal 12 and the socket terminal 22, the plug terminal 12 may first be inserted into the conductor 221 of the socket terminal 22. In one or more embodiments, an inrush current limiting circuit including a resistor 223 is formed between the plug terminal 12 and the conductor 222, and the inrush current may be suppressed by the resistor 223.

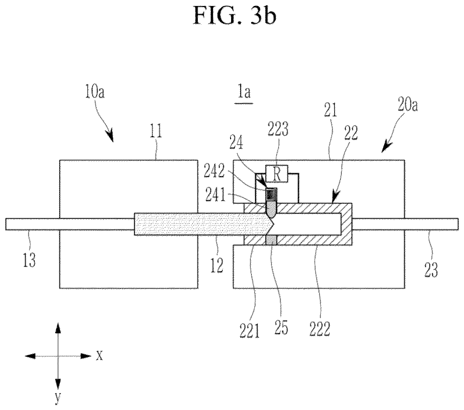

Referring to FIG. 3B, thereafter, if insertion of the plug terminal 12 continues, the end of the plug terminal 12 may be in contact with the elastic structure 24. The elastic force of the elastic structure 24 provides a force against the insertion force of the plug terminal 12, which may delay or slow insertion of the plug terminal 12.

Thereafter, if insertion of the plug terminal 12 continues, the protruding height of the elastic structure 24 decreases, allowing the plug terminal 12 to move toward the conductor 222 past the elastic structure 24. Finally, the plug terminal 12 may be in direct contact with the conductor 222, completing the connection between the first connector 10a and the second connector 20a. As the plug terminal 12 is in direct contact with the conductor 222, the current flow may flow directly between the plug terminal 12 and the conductor 222 without passing through the inrush current limiting circuit.

As described above, the connecting device 1a may automatically perform initial charging in the process of connecting the first connector 10a and the second connector 20a, thereby limiting the inrush current. In one or more embodiments, due to the elastic structure 24, insertion of the plug terminal 12 is delayed or resisted, thereby ensuring sufficient initial charging time.

Referring back to FIG. 1, to ensure insulation between the conductors 221 and 222 configuring the socket terminal 22, the second connector 20a may further include an insulator 25 inserted into a space where the elastic structure 24 is not arranged between the conductors 221 and 222.

Although FIG. 1 shows an example where the second connector 20a includes only one elastic structure 24, the present disclosure is not limited thereto. In one or more other embodiments, the second connector 20a may include a plurality of elastic structures 24 located between the conductors 221 and 222 configuring the socket terminal 22.

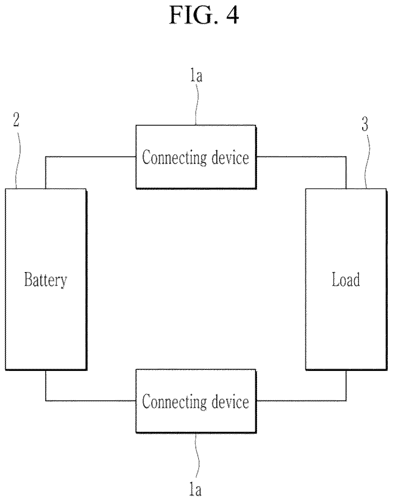

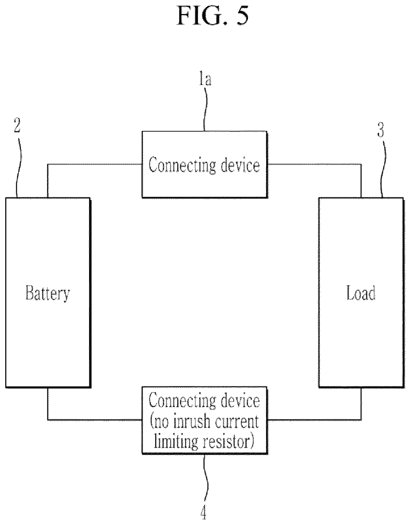

FIGS. 4 and 5 illustrates examples in which the connecting device 1a according to embodiments is applied to the electrical connection of a battery.

Referring to FIGS. 4 and 5, the connecting device 1a may be used to electrically connect one of the output terminals of the battery 2 (for example, a positive output terminal) and the load 3. For example, the wires 13 and 23 of the first connector 10a and the second connector 20a of the connecting device 1a may be electrically connected to the output terminal of the battery 2 and the load 3, respectively.

In one or more embodiments, if the first connector 10a and the second connector 20a of the connecting device 1a are connected, an electrical connection may be made between the output terminal of the battery 2 and the load 3 by the connecting device 1a.

Referring to FIG. 4, the electrical connection between the remaining one of the output terminals of the battery 2 (for example, a negative output terminal) and the load 3 may also be provided using the connecting device 1a. In one or more embodiments, referring to FIG. 5, the electrical connection between the remaining one of the output terminals of the battery 2 (for example, the negative output terminal) and the load 3 may also be provided using a connecting device 4, which does not include an inrush-current-limiting resistor.

In one or more embodiments, the connecting device 1a may also be used, not only for the electrical connection between the battery 2 and the load 3, but also for other types of electrical connections in which inrush current may occur, such as the electrical connection between the batteries 2.

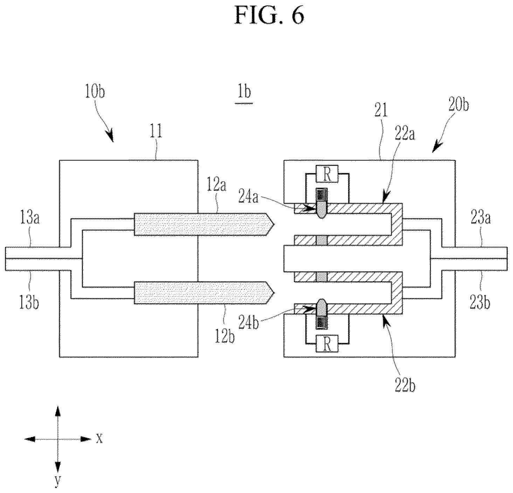

FIG. 6 schematically illustrates a connecting device according to one or more other embodiments.

Referring to FIG. 6, in a connecting device 1b according to one or more other embodiments, a first connector 10b may include a plurality of plug terminals 12a and 12b protruding in one direction (x direction) from the first connector body 11. In one or more embodiments, the second connector 20b may include a plurality of socket terminals 22a and 22b located inside the second connector body 21. Each plug terminal 12a and 12b is formed in the same structure as the plug terminal 12 described with reference to FIG. 1, and each socket terminal 22a and 22b may be formed with the same structure as the socket terminal 22 described with reference to FIGS. 1 and 2. In the description below, descriptions that overlap with the plug terminal 12 and the socket terminal 22 of the connecting device 1a according to embodiments may be omitted.

If the first connector 10b and the second connector 20b are coupled, the plug terminal 12a may be inserted into the socket terminal 22a and electrically connected to the socket terminal 22a, and the plug terminal 12b may be inserted into the socket terminal 22b and electrically connected to the socket terminal 22b.

The first connector 10b may further include wires 13a and 13b electrically connected to the plug terminals 12a and 12b, respectively. The second connector 20b may further include wires 23a and 23b electrically connected to the socket terminals 22a and 22b, respectively. The first connector 10b may be connected to a battery or to a load that receives power from the battery through wires 13a and 13b. The second connector 20b may be connected to a battery or to a load that receives power from the battery through wires 23a and 23b.

Referring to FIG. 2, the socket terminal 22 may include a plurality of conductors 221 and 222 spaced apart from each other along the insertion direction (x direction) of the corresponding plug terminals 12a and 12b, and the resistor 223 connected between the plurality of conductors 221 and 222. In the following description, for convenience of explanation, each constituent element configuring each socket terminal 22a and 22b will be described with reference to the reference numerals in FIG. 2.

The second connector 20b may further include a plurality of elastic structures 24a and 24b. Each elastic structure 24a and 24b may be located between the conductors 221 and 222 of the corresponding socket terminals 22a and 22b. Each of the elastic structures 24a and 24b is made of an insulating material to ensure insulation between the conductors 221 and 222 of the corresponding socket terminals 22a and 22b. Each elastic structure 24a and 24b may protrude from the second connector body 21 of the second connector 20b (e.g., in a predetermined direction (y direction)), toward the hollow portion of the corresponding socket terminal 22a and 22b. Each elastic structure 24a and 24b has a protruding height that is reduced by the insertion force of the corresponding plug terminals 12a and 12b, and may provide an elastic force against the insertion force of the corresponding plug terminals 12a and 12b. Each elastic structure 24 may include an insulator 241 located between the conductors 221 and 222, and a spring device 242 positioned between the insulator 241 and the second connector body 21 for applying an elastic force to the insulator 241.

At the initial stage of connection the first connector 10b and the second connector 20b, each plug terminal 12a and 12b may first be respectively inserted into the conductor 221 of the corresponding socket terminal 22a and 22b. In one or more embodiments, an inrush-current-limiting circuit including the resistor 223 is formed between each plug terminal 12a and 12b and the conductor 222 of the corresponding socket terminal 22a and 22b, and the inrush current may be suppressed by the resistor 223.

Thereafter, if insertion of the plug terminals 12a and 12b continues, the ends of each plug terminal 12a and 12b may be in contact with the corresponding elastic structures 24a and 24b. The elastic force of each elastic structure 24a and 24b provides a force against the insertion force of the plug terminals 12a and 12b, which may partially delay or slow the insertion of the plug terminals 12a and 12b.

Thereafter, if insertion of the plug terminals 12a and 12b continues, the protruding height of each of the elastic structures 24a and 24b decreases, allowing the plug terminals 12a and 12b to move toward the conductor 222 of the corresponding socket terminals 22a and 22b moving past the elastic structures 24a and 24b. Finally, each of the plug terminal 12a and 12b may be in direct contact with the conductor 222 of the corresponding socket terminals 22a and 22b, completing the connection between the first connector 10b and the second connector 20b. As each of the plug terminals 12a and 12b is in direct contact with the conductor 222 of the corresponding socket terminals 22a and 22b, the current flow between each plug terminal 12a and 12b and the conductor 222 of the corresponding socket terminals 22a and 22b may flow directly therebetween without going through the inrush-current-limiting circuit.

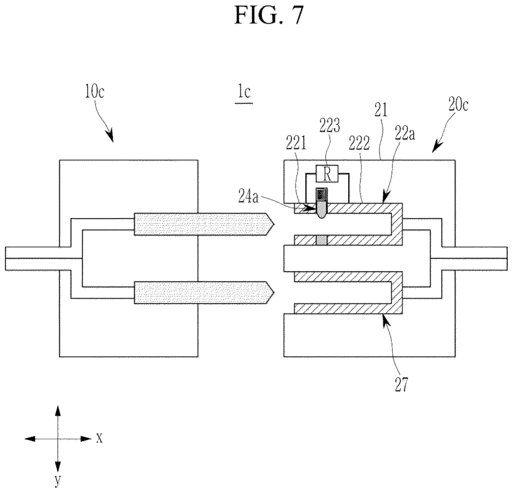

In FIG. 6, the resistor 223 and the elastic structure 24 for limiting inrush current are located on all of the socket terminals 22a and 22b configuring the second connector 20b, but the embodiments are not limited thereto. FIG. 7 schematically illustrates a connecting device 1c according to one or more other embodiments. Referring to FIG. 7, the first connector 10c is configured the same as the first connector 10b in FIG. 6, but a second connector 20c may be configured to include the plurality of conductors 221 and 222 and the resistor 223 that are spaced apart from only one of the socket terminals 22a of the socket terminals 22a and 27. In one or more embodiments, the elastic structure 24a may also be located only for some socket terminals 22a.

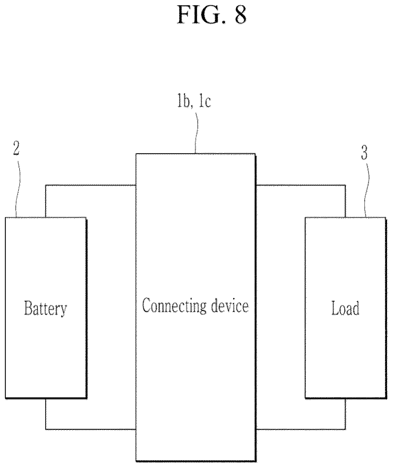

FIG. 8 illustrates an example in which the connecting devices 1b and 1c according to the embodiments of FIGS. 6 and 7 are applied to the electrical connection of a battery.

Referring to FIGS. 6 and 7, each connecting device 1b and 1c may include the first connectors 10b and 10c including a plurality of plug terminals, and the second connectors 20b and 20c including a plurality of socket terminals. In one or more embodiments, it is possible to provide an electrical connection between the output terminals of the battery 2 and the load 3 using only one connecting device 1b and 1c.

The connecting devices 1b and 1c may be used not only for the electrical connection between the battery 2 and the load 3, but also for other types of electrical connections where inrush current may occur, such as the electrical connection between batteries 2.

In all embodiments of the present disclosure, the first connector 10a, 10b, 10c and the second connector 20a, 20b, 20c are connectable to and detachable from each other.

An electronic or electrical device and/or any other related device or constituent element, according to embodiments of the present disclosure described herein, can be implemented using any suitable hardware, firmware (e.g., application-specific integrated circuits), software, or a combination of software, firmware, and hardware. For example, the elements of various configurations of the devices can be formed on a single integrated circuit (IC) chip or on separate IC chips. The elements of various configurations of the devices can be implemented as a flexible printed circuit film, a tape carrier package (TCP), or a printed circuit board (PCB), or may be implemented on a single substrate. The electrical connection or interconnection described in the present specification can be implemented by wire or conductive elements on, for example, a PCB or other type of circuit carrier. The conductive element may include metallizations, such as surface metallizations and/or pins, and may include conductive polymers or ceramics.

The various configurations elements of the devices may be a process or a thread that runs on at least one processor and at least one computing device to perform the various functions described herein, executes computer program instructions, and interacts with other system constituent elements. The computer program instructions are stored in a memory that can be implemented in a computing device using standard memory devices, such as a random access memory (RAM). The computer program instructions may also be stored on other non-transitory computer readable media such as, for example, a CD-ROM, a flash drive, and the like.

A person of an ordinary skill in the art should recognize that functions of various computing devices may be combined or integrated into a single computing device, or functions of a corresponding computing device can be distributed across different computing devices, while not departing from the range of embodiments of the present disclosure.

### Reference signs

- 1a, 1b, 1c:: Connecting device
- 10a, 10b, 10c:: First connector
- 11:: First connector body
- 12, 12a:: First connecting Terminal (Plug terminal)
- 12b:: Third connecting Terminal (Plug terminal)
- 13, 13a:: First wire of first connector
- 13b:: Third wire of first connector
- 20a, 20b, 20c:: Second connector
- 21:: Second connector body
- 22, 22a, 22b, 27:: Second connecting terminal (Socket terminal)
- 22b:: Third connecting terminal (Socket terminal)
- 221:: First Conductor
- 222:: Second Conductor
- 223:: Resistor
- 23, 23a:: Second wire of the second connector
- 23b:: Forth wire of the second connector
- 24, 24a, 24b:: Elastic structure
- 241:: Insulator
- 242:: Spring device
- 25:: Insulator
- 2:: Battery
- 3:: Load

## Claims

1. A connecting device (1a, 1b, 1c, 4) comprising:
a first connector (10a, 10b, 10c) comprising a first connecting terminal (12, 22); and
a second connector (20a, 20b, 20c) comprising a second connecting terminal (12, 22) defining a hollow portion configured to receive the first connecting terminal (12, 22), the second connecting terminal (12, 22) comprising first and second conductors (221, 222) spaced apart from each other along an insertion direction of the first connecting terminal (12, 22), and a first resistor (223) electrically connected between the first and second conductors (221, 222), and
wherein the second connector (20a, 20b, 20c) further comprises a first elastic structure (24, 24a, 24b) between the first and second conductors (221, 222), and configured to provide an elastic force against an insertion force of the first connecting terminal (12, 22) to resist insertion of the first connecting terminal (12, 22).

2. The connecting device (1a, 1b, 1c, 4) as claimed in claim 1, wherein the first connecting terminal (12, 22) is configured to contact the first conductor (221, 222) at an initial stage of connection of the first connector (10a, 10b, 10c) and the second connector (20a, 20b, 20c), and is configured to contact with the second conductor (221, 222) upon insertion of the first connecting terminal (12, 22) into the second connecting terminal (12, 22).

3. The connecting device (1a, 1b, 1c, 4) as claimed in claim 1 or 2, wherein the first elastic structure (24, 24a, 24b) comprises:
an insulator (25, 241) between the first and second conductors (221, 222), protruding toward the hollow portion due to the elastic force, and having a variable protrusion height corresponding to the insertion force.

4. The connecting device (1a, 1b, 1c, 4) as claimed in claim 3, wherein
the first elastic structure (24, 24a) further includes a spring device (242) between the insulator (25, 241) and a connector body (11, 21) of the second connector (20a, 20b, 20c), and configured to provide the elastic force to the insulator (25, 241).

5. The connecting device (1a, 1b, 1c, 4) as claimed in one of the preceding claims, wherein the first connector (10a, 10b, 10c) further comprises a first wire (13, 13a) configured to electrically connect a battery (2) or a load (3) to the first connecting terminal (12, 12a), and
wherein the second connector (20a, 20b, 20c) further comprises a second wire (23, 23a) configured to electrically connect the load (3) or the battery (2) to the second connecting terminal (22, 22a).

6. The connecting device (1a, 1b, 1c, 4) as claimed in one of claims 1 to 4, wherein the first connector (10a, 10b, 10c) further comprises a first wire (13, 13a) configured to electrically connect a first battery (2) to the first connecting terminal (12, 12a), and
wherein the second connector (20a, 20b, 20c) further comprises a second wire (23, 23a) configured to electrically connect a second battery (2) to the second connecting terminal (22, 22a).

7. The connecting device (1a, 1b, 1c, 4) as claimed in one of the preceding claims, wherein the first connector (10a, 10b, 10c) further comprises a third connecting terminal (12b), and
wherein the second connector (20b, 20c) further comprises a fourth connecting terminal (22b) having a hollow portion configured to receive the third connecting terminal (12b).

8. The connecting device (1a, 1b, 1c, 4) as claimed in claim 7, wherein the fourth connecting terminal (22b) comprises third and fourth conductors spaced apart from each other along an insertion direction of the third connecting terminal (12b), and a second resistor electrically connected between the third and fourth conductors, and
wherein the second connector (20a, 20b, 20c) further comprises a second elastic structure (24b) between the third and fourth conductors, and configured to provide an elastic force against an insertion force of the third connecting terminal (12b) to resist insertion of the third connecting terminal (22b).

9. The connecting device (1a, 1b, 1c, 4) as claimed in claim 8, wherein the third connecting terminal (12b) is configured to contact the third conductor at an initial stage of connection of the first connector (10a, 10b, 10c) and the second connector (20a, 20b, 20c), and is configured to contact the fourth conductor (221, 222) upon insertion of the third connecting terminal (12b) into the fourth connecting terminal (22b).

10. The connecting device (1a, 1b, 1c, 4) as claimed in one of claims 7 to 9, wherein the first connector (10a, 10b, 10c) further comprises a third wire (13b) electrically configured to electrically connect a battery (2) or a load (3) to the third connecting terminal (12b), and
wherein the second connector (20a, 20b, 20c) further comprises a fourth wire (23b) configured to electrically connect the load (3) or the battery (2) to the fourth connecting terminal (22b).

11. The connecting device (1a, 1b, 1c, 4) as claimed in one of claims claim 7 to 9, wherein the first connector (10a, 10b, 10c) further comprises a third wire (13b) configured to electrically connect a first battery (2) to the third connecting terminal (12b), and
wherein the second connector (20a, 20b, 20c) further comprises a fourth wire (23b) configured to electrically connect a second battery (2) to the fourth connecting terminal (22b).

12. The connecting device (1a, 1b, 1c, 4) as claimed in one of the preceding claims, wherein:
the first and second conductors (221, 222) have a ring, cylindrical, or polygonal column shape into which the first connecting terminal (12, 12a) is insertable.

13. The connecting device (1a, 1b, 1c, 4) as claimed in one of the preceding claims, wherein the first connecting terminal (12, 12a) comprises a pin or a column-shaped conductor.

14. A second connector (20a, 20b, 20c) as claimed in one of claims 1 to 12 for use with a corresponding electric plug.

15. A first connector (10a, 10b, 10c) as claimed in one of claims 1 to 11 or 13 for use with the second connector (20a, 20b, 20c) of claim 14.
